# EUROPÄISCHE PATENTANMELDUNG

(11) **EP 1 598 640 A1**
(43) Veröffentlichungstag der Anmeldung: **23.11.2005**
(21) Anmeldenummer: 05103204.3
(22) Anmeldetag: 21.04.2005
(51) Int. Cl.: G01C 21/26, B60K 37/04, B60R 11/02

(54) **Befestigungsvorrichtung für einen mobilen Navigationsrechner sowie Navigationssystem**

(30) Priorität: 19.05.2004 DE 202004008269 U
(71) Anmelder: Buchhalter, Thomas, 53859 Niederkassel (DE)
(72) Erfinder: Buchhalter, Thomas, 53859 Niederkassel (DE)
(74) Vertreter: Dallmeyer, Georg

(57) **Zusammenfassung**

Bei Befestigungsvorrichtung (1) zur abnehmbaren Befestigung eines mobilen Navigationsrechners (2) in einem Fahrzeug (4), mit einer Halterung (6), die an einem Fahrzeugteil (7) befestigbar ist, wobei an dem mobilen Navigationsrechner (2) mindestens ein Anschlusskabel (8) angeschlossen ist, ist vorgesehen, dass die Halterung eine Montageplatte (10) mit einer verdeckten Kabelführung (12) zur Aufnahme des Anschlusskabels (8) aufweist, wobei die verdeckte Kabelführung (12) derart ausgestaltet ist, dass das mindestens eine Anschlusskabel (8) unsichtbar zu einer Kabelöffnung (14) an dem Fahrzeugteil (7) zuführbar ist.

## Beschreibung

Die Erfindung betrifft eine Befestigungsvorrichtung für einen mobilen Navigationsrechner nach dem Oberbegriff des Anspruchs 1 sowie ein Navigationssystem nach dem Oberbegriff des Anspruchs 14.

Navigationssysteme für Fahrzeuge sind bekannt. Derartige Navigationssysteme bestehen meist aus einer Bildschirmeinheit und einer Rechnereinheit, wobei die Bildschirmeinheit in dem Armaturenbrett des Fahrzeugs fest eingebaut ist. Die Eingabe und Bedienung des Navigationssystems erfolgt meist über ein Joysticksystem. Eine derartige Eingabe ist zeitaufwändig und kompliziert. Darüber hinaus wird für das Programmieren einer gewünschten Navigationsroute viel Zeit beansprucht, so dass der Fahrer des Fahrzeugs vor dem Start erst einmal einen längeren Zeitraum einplanen muss, in dem er das Navigationssystem bedient. Derartige fest in das Fahrzeug eingebaute Navigationssysteme sind darüber hinaus sehr teuer.

Ferner muss ein Fahrzeugbesitzer, falls er ein weiteres Fahrzeug besitzt, oder sich ein weiteres Fahrzeug kauft, erneut ein Navigationssystem kaufen.

Weiterhin sind Navigationssysteme in Verbindung mit mobilen Handheld-Computern, sogenannten PDA's bekannt. Dabei befinden sich Navigationsrechner und Bildschirm in dem mobilen Handheld-Computer, so dass dieser beliebig in verschiedenen Fahrzeugen genutzt werden kann. Darüber hinaus kann eine Navigationsroutenplanung bequem außerhalb des Fahrzeuges vorgenommen werden. Zur Benutzung des Navigationssystems in einem Fahrzeug wird der Handheld-Computer in einer Haltevorrichtung, die meist mit einem Saugnapf an der Windschutzscheibe befestigt wird, eingesetzt. An einer Schnittstelle des Handheld-Computers wird die Stromversorgung und eine Navigationsantenne angeschlossen. Die Stromversorgung erfolgt über ein an die Buchse des Zigarettenanzünders angeschlossenes Kabel. Nachteilig bei dieser Art von Navigationssystem ist, dass eine Vielzahl von Kabeln frei im Fahrzeug liegen oder verlegt werden müssen, die den Fahrer bei der Fahrt behindern können.

Eine derartige Haltevorrichtung ist nicht sehr stabil, so dass bei unruhiger Fahrt die Haltevorrichtung sich von der Windschutzscheibe lösen kann. Auch sind die Haltevorrichtung und die freiliegenden Kabel vom ästhetischem Standpunkt her unerwünscht.

Es ist daher die Aufgabe der vorliegenden Erfindung, eine stabile und ästhetisch ansprechende Befestigung eines mobilen Navigationsrechners zu ermöglichen und darüber hinaus ein mobiles Navigationssystem zu schaffen, das die Nachteile des Standes der Technik vermeidet.

Zur Lösung dieser Aufgabe dienen die Merkmale des Anspruchs 1 und 14.

Über eine Montageplatte ist die Halterung besonders einfach und stabil an einem Fahrzeugteil befestigbar. Darüber hinaus ermöglicht die verdeckte Kabelführung zur Aufnahme des Anschlusskabels ein unsichtbares Zuführen des Anschlusskabels zu einer Kabelöffnung an dem Fahrzeugteil, so dass das Anschlusskabel ästhetisch ansprechend und den Fahrer nicht behindernd von dem an der Befestigungsvorrichtung befestigten Navigationsrechner zu beispielsweise der Stromversorgung des Fahrzeugs geführt werden kann.

In einer bevorzugten Ausführungsform besteht die Montageplatte aus einem flexiblen Material, so dass sie an das Fahrzeugteil anpassbar ist. Dadurch kann die Montageplatte über die gesamte Fläche der Unterseite mit dem Fahrzeugteil verbunden werden, wodurch eine besonders stabile Befestigung der Befestigungsvorrichtung an dem Fahrzeugteil gewährleistet wird. Ferner wird ein ästhetisches Erscheinungsbild ermöglicht.

Die Halterung der Befestigungsvorrichtung kann einen Haltearm mit einem Befestigungsteil zur Befestigung des Navigationsträgers an dem Haltearm aufweisen. Auf diese Art und Weise ist eine einfache Befestigung des Navigationsrechners möglich. Auch kann mit Hilfe des Haltearms der Navigationsrechner optimal im Blickfeld des Fahrzeugführers befestigt werden. Das Befestigungsteil ist dabei an eine entsprechende Vorrichtung des Navigationsrechners angepasst.

In einer besonders bevorzugten Ausführungsform ist in dem Befestigungsteil eine mit dem Anschlusskabel verbundene Kontakteinrichtung integriert, so dass beim Befestigen des Navigationsrechners an dem Befestigungsteil eine mechanische und elektrische Verbindung zwischen dem Navigationsrechner und der Befestigungsvorrichtung herstellbar ist. Bei der Befestigung eines mit einer entsprechenden Aufnahme- und Anschlusseinrichtung ausgestatteten Navigationsrechners kann dieser mit einem Handgriff derart an der Befestigungsvorrichtung angebracht werden, dass sowohl eine Fixierung an der mechanischen Befestigungsvorrichtung als auch ein elektrischer Kontakt zu der Kontakteinrichtung und somit zu dem Anschlusskabel hergestellt werden kann. Durch die Funktionsintegration von Befestigungsteil und Kontakteinrichtung ist gewährleistet, dass stets eine sichere elektrische Verbindung zwischen dem Navigationsrechner und dem Anschlusskabel hergestellt ist, die auch bei starker Vibration des Fahrzeuges nicht unterbrochen wird.

Das Befestigungsteil kann Magnete für eine magnetische Befestigung des Navigationsrechners aufweisen. Alternativ kann das Befestigungsteil formschlüssig mit dem Navigationsrechner verbindbar sein, vorzugsweise über eine Einrastverbindung. Beide Arten der Befestigung gewährleisten eine stabile Fixierung des Navigationsrechners an der Befestigungsvorrichtung, die gleichzeitig verschleißarm ist, so dass auch nach häufiger Benutzung der Befestigungseinrichtung stets eine stabile Befestigung des Navigationsrechners gewährleistet ist.

Die verdeckte Kabelführung kann dabei aus einem Kabelkanal bestehen.

Vorzugsweise ist vorgesehen, dass das Anschlusskabel an einer seitlichen Stirnfläche aus der Montageplatte austritt. Alternativ kann das Anschlusskabel auch unten aus der Montageplatte austreten. Dadurch kann das Anschlusskabel nahezu unsichtbar in eine Kabelöffnung an dem Fahrzeugteil geführt werden.

Vorzugsweise ist vorgesehen, dass der Haltearm schwenkbar an der Montageplatte gelagert ist. Der Fahrzeugführer kann auf diese Weise einfach den an der Befestigungsvorrichtung befestigten Navigationsrechner entsprechend seinen Wünschen verstellen, so dass sich der Bildschirm des Navigationsrechners optimal in seinem Blickfeld befindet.

In einer bevorzugten Ausführungsform kann das Befestigungsteil drehbar an dem Haltearm gelagert sein. Dadurch ist es möglich, den Navigationsrechner sowohl im Hochformat als auch im Querformat zu benutzen.

In einer besonders bevorzugten Ausführungsform ist diese Montageplatte an das Fahrzeugteil, vorzugsweise an ein Armaturenbrett des Fahrzeuges, über eine Klebeverbindung, vorzugsweise einem doppelseitigen Klebeband befestigbar. Auf diese Art und Weise ist eine einfache Montage der Befestigungseinrichtung in dem Fahrzeug möglich. Darüber hinaus wird durch die Klebeverbindung das Fahrzeugteil nicht beschädigt, so dass die Befestigungsvorrichtung rückstandslos von dem Fahrzeugteil entfernt werden kann.

In einer besonders bevorzugten Ausführungsform weist die Kontakteinrichtung Federkontakte auf. Nach der Befestigung des Navigationsrechners an der Befestigungsvorrichtung kann mit Hilfe der Federkontakte gewährleitet werden, dass die Kontakteinrichtung aufgrund einer Vorspannung der Federn der Federkontakte stets elektrische Verbindung zu der Anschlusseinrichtung des Navigationsrechners hat.

Die Montageplatte kann derart ausgestaltet sein, dass sie durch Zuschneiden an das Fahrzeugteil anpassbar ist. Auf diese Weise kann die Befestigungsvorrichtung an unterschiedlichen Fahrzeugteilen befestigt werden, ohne dass eine Fläche bestimmter Größe an diesem Fahrzeugteil verfügbar sein muss. Ferner kann die Montageplatte an um das Fahrzeugteil befindliche Gegenstände angepasst werden. So kann beispielsweise bei der Befestigung der Befestigungsvorrichtung auf dem Armaturenbrett die Montageplatte entsprechend der Kontur der angrenzenden A-Säule des Fahrzeuges zugeschnitten werden.

Die Aufgabe wird ferner durch ein mobiles Navigationssystem bestehend aus einer vorstehend beschriebenen Befestigungsvorrichtung und einem mobilen Navigationsrechner gelöst. Der Navigationsrechner besteht dabei aus einem Gehäuse, einem Bildschirm, vorzugsweise einem Touch-Screen-Bildschirm, einer Stromversorgungseinrichtung und einer Navigationsantenne. Ein solches Navigationssystem kann auf eine einfache Art und Weise nachträglich in einem Auto nachgerüstet werden, ohne das freiliegende Kabel den Fahrer während der Fahrt behindern können oder der ästhetische Eindruck eines Navigationssystems den Betrachter stört. Auch ist es möglich, in Fahrzeugen, deren Hersteller kein fest eingebautes Navigationssystem anbieten, ein Navigationssystem nachzurüsten, das stabil befestigt ist und einen ästhetisch ansprechenden Eindruck vermittelt, indem es sich gut ins Gesamtbild des Fahrzeugcockpits einpasst.

In einer bevorzugten Ausführungsform weist die Halterung der Befestigungsvorrichtung des mobilen Navigationssystems einen Haltearm mit einem Befestigungsteil auf. An dem Navigationsrechner ist auf der dem Bildschirm gegenüberliegenden Rückseite des Gehäuses eine an das Befestigungsteil angepasste Aufnahmevorrichtung ausgestaltet. Auf diese Weise kann der Navigationsrechner besonders einfach an der Befestigungsvorrichtung befestigt werden.

In einem besonders bevorzugten Ausführungsbeispiel des mobilen Navigationssystems ist eine mit dem Anschlusskabel verbundene Kontakteinrichtung in dem Befestigungsteil integriert. Die Aufnahmevorrichtung des Navigationsrechners weist dabei an die Kontakteinrichtung der Befestigungsvorrichtung angepasste elektrische Kontakte auf.

Ein Navigationsrechner kann über das Anschlusskabel mit der Fahrzeugelektronik und/oder der Fahrzeugstromversorgung, und/oder eine in das Fahrzeug integrierten Navigationsantenne verbindbar sein.

In einer besonders bevorzugten Ausführungsform hat der Navigationsrechner eine integrierte Navigationsantenne.

Im Folgendem wird ein Ausführungsbeispiel der Erfindung unter Bezugnahme auf die Zeichnungen näher erläutert.

### Es zeigen:

Fig. 1 eine erfindungsgemäße Befestigungsvorrichtung sowie einem schematisch angedeuteten Navigationsrechner und

Fig. 2 ein in ein Fahrzeug eingebautes Navigationssystem mit erfindungsgemäßer Befestigungsvorrichtung.

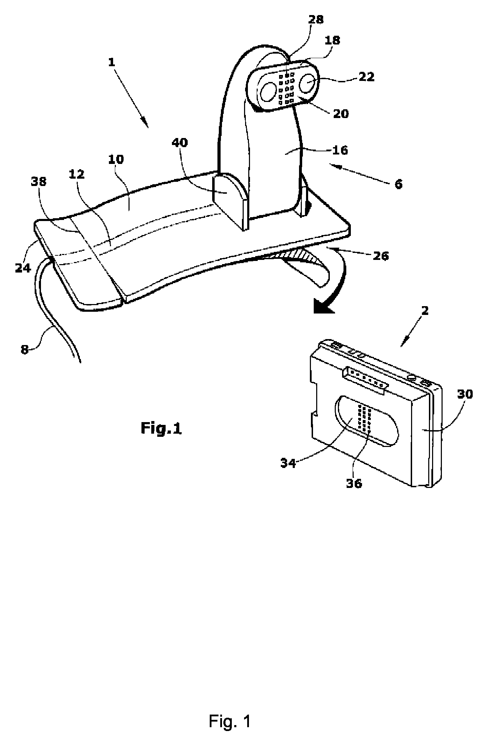

In Fig. 1 ist eine erfindungsgemäße Befestigungsvorrichtung 1 in einer Gesamtansicht sowie ein Navigationsrechner 2 schematisch dargestellt. Die Befestigungsvorrichtung 1 weist eine Halterung 6 und eine Motageplatte 10 auf. In der Montageplatte 10 ist eine verdeckte Kabelführung 12 eingearbeitet. Im dargestellten Ausführungsbeispiel ist die Kabelführung 12 als ein Kabelkanal ausgestaltet. Dieser ist in dem dargestellten Ausführungsbeispiel nach unten offen. Alternativ kann es auch ein komplett geschlossener oder ein nach oben hin offener Kabelkanal sein.

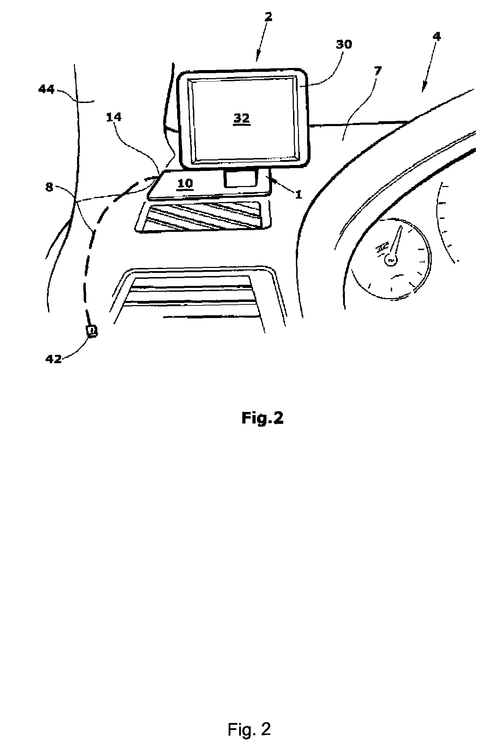

Das Anschlusskabel 8 tritt an einer seitlichen Stirnfläche 24 der Montageplatte 10 aus. In einem nicht dargestellten Ausführungsbeispiel kann das Anschlusskabel 8 auch an der Unterseite der Montageplatte 10 austreten. Die Montageplatte 10 ist aus einem flexiblen Material hergestellt, und kann dadurch an die Unterlage, auf der sie befestigt ist, angepasst werden. Die Befestigung auf einem Armaturenbrett 7 eines Fahrzeugs 4, wie in Fig. 2 dargestellt, erfolgt mit Hilfe eines doppelseitigen Klebebandes 26. Alternativ kann an der Unterseite der Montageplatte 10 auch eine Klebeschicht angeordnet sein. Da die Befestigungsvorrichtung 1 auch als Nachrüstteil eingesetzt werden soll, kann mit Hilfe des doppelseitigen Klebebandes oder der Klebeschicht auf eine einfach Art und Weise auf dem gewünschten Fahrzeugteil befestigt werden. Darüber hinaus sind derartige Klebeschichten leicht lösbar, so dass auch ein Ausbau der Befestigungsvorrichtung 1 aus dem Fahrzeug 4 rückstandslos möglich ist. Alternativ kann die Befestigungsvorrichtung auch über die Montageplatte 10 mit Schrauben, oder anderen Befestigungsmitteln befestigt werden.

Die Montageplatte 10 kann bei Bedarf, wie in Fig. 1 durch die Linie 38 angedeutet, zugeschnitten und somit an die Umgebung angepasst werden.

Die Halterung 6 weist einen Haltearm 16 und ein Befestigungsteil 18 auf. Der Haltearm 16 ist mit Hilfe einer Schwenklagerung 40 auf der Montageplatte 10 gelagert. Die Schwenklagerung 40 kann eine nicht dargestellte Einrastvorrichtung aufweisen, durch die der Haltearm 16 in einer festen Winkelposition zu der Montageplatte 10 gehalten werden kann. Alternativ zu der Einrastvorrichtung kann dies auch über eine Klemmschraube geschehen.

Das Befestigungsteil 18 ist drehbar an dem Haltearm 16 gelagert. In der Mitte weist das Befestigungsteil 18 eine Kontakteinrichtung 20 auf. Die Kontakteinrichtung 20 besteht aus einzelnen Federkontakten 28. Seitlich der Federkontakte sind Magnete 22 angeordnet, mit Hilfe deren der Navigationsrechner 2 an dem Befestigungsteil 18 befestigt werden kann. Zur Aufnahme des Befestigungsteils 18 weist der Navigationsrechner 2 auf der Rückseite des Gehäuses 30 eine Aufnahmevorrichtung 34 auf. In der Aufnahmevorrichtung 34 sind mittig elektrische Kontakte 36 an die Kontakteinrichtung 20 angepasst angeordnet. Seitlich von den elektrischen Kontakten 36 weist die Aufnahmeeinrichtung 34 nicht dargestellte metallische Flächen oder Gegenmagnete auf, an die die Magnete 22 des Befestigungsteils 18 anhaften können. Vorzugsweise ist die Aufnahmevorrichtung 34 an die Form des Befestigungsteils 18 angepasst. Alternativ zu der dargestellten magnetischen Befestigung kann in einem alternativen Ausführungsbeispiel die Befestigung auch über eine Einrastverbindung erfolgen.

Die Federkontakte 28 sind so ausgestaltet, dass nach Befestigung des Navigationsrechners 2 an der Befestigungsvorrichtung 1 die Federkontakte 18 gegen eine vorgespannte Feder gedrückt werden und somit unter dieser Vorspannung gegen die Kontakte 36 des Navigationsrechners 2 anliegen. Dadurch ist ein dauerhafter Kontakt auch bei starker Vibration des Fahrzeuges 4 gewährleistet. Alternativ kann die Kontakteinrichtung 20 auch andere gängige Kontaktmedien verwenden.

In Fig. 2 ist eine erfindungsgemäßes Navigationssystem bestehend aus Navigationsrechner 2 und Befestigungsvorrichtung 1 in einem Fahrzeug 4 eingebauten Zustand dargestellt. Ein aus der Montageplatte 10 seitlich austretendes Anschlusskabel 8 wird durch eine Kabelöffnung 14 am Armaturenbrett 7 in einem nicht dargestellten fahrzeugseitigen Kabelkanal geführt. Die Kabelöffnung 14 kann beispielsweise an der Anstoßkante des Armaturenbretts 7 mit der A-Säule 44 des Fahrzeugs 4 sein. Das Anschlusskabel 8 der fahrzeugseitigen Stromversorgung sowie der Fahrzeugelektronik verbunden. Das Anschlusskabel 8 weist einen Anschlussstecker 42 auf, mit dem das Anstecken an einen wie schon im Fahrzeug befindlichen Kabelbaum möglich ist.

Über das Anschlusskabel 8 wird ein Navigationsrechner über die Fahrzeugbatterie mit Strom versorgt. Darüber hinaus können bei Verbindung des Anschlusskabels 8 an die Fahrzeugelektronik, Fahrzeugdaten, wie beispielsweise die Geschwindigkeit, auf den Navigationsrechner übertragen und auf dem Bildschirm 32 des Navigationsrechners 2 dargestellt werden.

An den Navigationsrechner 2 ist eine externe, nicht dargestellte Navigationsantenne angeschlossen. Alternativ dazu kann in dem Navigationsrechner 2 eine Navigationsantenne integriert sein. Für den Fall dass in dem Fahrzeug 4 bereits eine Navigationsantenne vorhanden ist, kann über das Anschlusskabel 8 der Navigationsrechner 2 an diese angeschlossen werden.

In Fig. 2 ist der Navigationsrechner 2 in eine horizontale Stellung an der Befestigungsvorrichtung 1 befestigt. Durch die drehbare Lagerung des Befestigungsteils 18 an dem Haltekam 16 ist eine Drehung des Navigationsrechners 2 möglich, so dass diese auch in vertikaler Stellung genutzt werden kann. Das auf dem Bildschirm 32 dargestellte Bild kann softwareseitig an die Ausrichtung des Bildschirms angepasst werden.

## Patentansprüche

1. Befestigungsvorrichtung (1) zur abnehmbaren Befestigung eines mobilen Navigationsrechners (2) in einem Fahrzeug (4), mit einer Halterung (6), die an einem Fahrzeugteil (7) befestigbar ist, wobei an dem mobilen Navigationsrechner (2) mindestens ein Anschlusskabel (8) angeschlossen ist, **dadurch gekennzeichnet, dass** die Halterung eine Montageplatte (10) mit einer verdeckten Kabelführung (12) zur Aufnahme des Anschlusskabels (8) aufweist, wobei die verdeckte Kabelführung (12) derart ausgestaltet ist, dass das mindestens eine Anschlusskabel (8) unsichtbar zu einer Kabelöffnung (14) an dem Fahrzeugteil (7) zuführbar ist.

2. Befestigungsvorrichtung nach Anspruch 1, **dadurch gekennzeichnet, dass** die Montageplatte (10) aus einem flexiblen Material besteht, derart, dass die Montageplatte (10) an das Fahrzeugteil (7) anpassbar ist.

3. Befestigungsvorrichtung nach Anspruch 1 oder 2, **dadurch gekennzeichnet, dass** die Halterung (6) einen Haltearm (16) mit einem Befestigungsteil (18) zur Befestigung des Navigationsrechners (2) an dem Haltearm (16) aufweist.

4. Befestigungsvorrichtung nach Anspruch 3, **dadurch gekennzeichnet, dass** eine mit dem Anschlusskabel (8) verbundenen Kontakteinrichtung (20) in dem Befestigungsteil (18) integriert ist, derart, dass beim Befestigen des Navigationsrechners (2) an dem Befestigungsteil (18) eine mechanische und elektrische Verbindung zwischen dem Navigationsrechner (2) und der Befestigungsvorrichtung (1) herstellbar ist.

5. Befestigungsvorrichtung nach Anspruch 3 oder 4, **dadurch gekennzeichnet, dass** das Befestigungsteil (18) Magnete (22) zur magnetischen Befestigung des Navigationsrechners (2) aufweist.

6. Befestigungsvorrichtung nach Anspruch 3 oder 4, **dadurch gekennzeichnet, dass** das Befestigungsteil (18) formschlüssig mit dem Navigationsrechner (2) verbindbar ist, vorzugsweise über eine Einrastverbindung.

7. Befestigungsvorrichtung nach einem der Ansprüche 1 bis 6, **dadurch gekennzeichnet, dass** die verdeckte Kabelführung (12) aus einem Kabelkanal besteht.

8. Befestigungsvorrichtung nach einem der Ansprüche 1 bis 7, **dadurch gekennzeichnet, dass** das Anschlusskabel (8) an einer seitlichen Stirnfläche (24) aus der Montageplatte (10) austritt.

9. Befestigungsvorrichtung nach einem der Ansprüche 1 bis 7, **dadurch gekennzeichnet, dass** das Anschlusskabel unten aus der Montageplatte austritt.

10. Befestigungsvorrichtung nach einem der Ansprüche 3 bis 9, **dadurch gekennzeichnet, dass** der Haltearm (16) schwenkbar an der Montageplatte (10) gelagert ist.

11. Befestigungsvorrichtung nach einem der Ansprüche 3 bis 10, **dadurch gekennzeichnet, dass** das Befestigungsteil (18) drehbar an dem Haltearm (16) gelagert ist.

12. Befestigungsvorrichtung nach einem der Ansprüche 1 bis 11, **dadurch gekennzeichnet, dass** die Montageplatte (10) an das Fahrzeugteil (7), vorzugsweise an ein Armaturenbrett des Fahrzeuges (4), über eine Klebeverbindung, vorzugsweise einem doppelseitigen Klebeband (26), befestigbar ist.

13. Befestigungsvorrichtung nach einem der Ansprüche 1 bis 12, **dadurch gekennzeichnet, dass** die Kontakteinrichtung (20) Federkontakte (28) aufweist.

14. Befestigungsvorrichtung nach einem der Ansprüche 1 bis 13, **dadurch gekennzeichnet, dass** die Montageplatte (10) durch Zuschneiden an das Fahrzeugteil (7) anpassbar ist.

15. Mobiles Navigationssystem bestehend aus einer Befestigungsvorrichtung (1) nach einem der Ansprüche 1 bis 14 und einem mobilen Navigationsrechner (2), wobei der Navigationsrechner (2) ein Gehäuse (30), einen Bildschirm (32), vorzugsweise einen Touchscreen-Bildschirm, eine Stromversorgungseinrichtung und eine Navigationsantenne aufweist.

16. Mobiles Navigationssystem nach Anspruch 15, **dadurch gekennzeichnet, dass** die Halterung (6) einen Haltearm (16) mit einem Befestigungsteil (18) zur Befestigung des Navigationsrechners (2) an dem Haltearm (16) aufweist und dass der Navigationsrechner (2) auf der dem Bildschirm gegenüberliegenden Rückseite des Gehäuses eine an das Befestigungsteil (18) angepasste Aufnahmevorrichtung (34) zur Befestigung des Navigationsrechners (2) an der Befestigungsvorrichtung (1) aufweist.

17. Mobiles Navigationssystem nach Anspruch 16, **dadurch gekennzeichnet, dass** eine mit dem Anschlusskabel (8) verbundene Kontakteinrichtung (20) in dem Befestigungsteil (18) integriert ist und dass die Aufnahmevorrichtung (34) an die Kontakteinrichtung (20) der Befestigungsvorrichtung (1) angepasste elektrische Kontakte (36) aufweist.

18. Mobiles Navigationssystem nach einem der Ansprüche 15 bis 17, **dadurch gekennzeichnet, dass** der Navigationsrechner (2) über das Anschlusskabel (8) mit der Fahrzeugelektronik und/oder der Fahrzeugstromversorgung und/oder einer in das Fahrzeug (4) integrierten Navigationsantenne verbindbar ist.

19. Mobiles Navigationssystem nach einem der Ansprüche 15 bis 18, **dadurch gekennzeichnet, dass** der Navigationsrechner (2) eine integrierte Navigationsantenne aufweist.
